Europäisches Patentamt

European Patent Office

Office européen des brevets

(19)

(11) Veröffentlichungsnummer: **0 193 970**

**A2**

(12) **EUROPÄISCHE PATENTANMELDUNG**

(21) Anmeldenummer: 86103069.0

(22) Anmeldetag: **07.03.86**

(51) Int. Cl.⁴: **C04B 35/56** , C01B 31/36

(30) Priorität: **07.03.85 DE 3508171**

(43) Veröffentlichungstag der Anmeldung:
**10.09.86 Patentblatt 86/37**

(84) Benannte Vertragsstaaten:
**AT BE CH DE FR GB IT LI NL SE**

(71) Anmelder: **Elektroschmelzwerk Kempten GmbH
Herzog-Wilhelm-Strasse 16
D-8000 München 22(DE)**

(72) Erfinder: **Matje, Peter, Dr. Dr.-Ing.
Schwarzachen 4
D-8961 Wiggensbach(DE)**
Erfinder: **Schwetz, Karl A., Dr. Dipl.-Ing.
Bergstrasse 4
D-8961 Sulzberg(DE)**

(54) **Verfahren zur Herstellung von sinteraktiven Siliciumcarbid- und/oder Borcarbidpulvern.**

㊲ Gegenstand der Erfindung ist ein Verfahren zur Herstellung von sinteraktiven Siliciumcarbid-und/oder Borcarbidpulvern mit maximalen Teilchengrößen von 1 μm und feiner. Das Verfahren wird durch Naßmahlung in wäßriger Suspension unter Verwendung von Mühlen mit Mahlkörperfüllung und Zusatz von Antioxidantien in Gegenwart von Tensiden und anschließender naßchemischer Behandlung mit Kaliumhydroxid als Base durchgeführt. Die Naßmahlung kann beispielsweise unter Zusatz von Hydrochinon in Gegenwart von quartären Ammoniumsalzen und die naßchemische Behandlung mit einer 5 -50 Gew.-%igen wäßrigen Kaliumhydroxidlösung unter Normaldruck bei Temperaturen im Bereich von Raumtemperatur bis zur Siedetemperatur des Reaktionsgemisches oder unter erhöhtem Druck bei Temperaturen bis zu 300°C durchgeführt werden.

EP 0 193 970 A2

Verfahren zur Herstellung von sinteraktiven Siliciumcarbid-und/oder Borcarbidpulvern

Es ist bekannt, daß die Eigenschaften von Sinterkörpern in hohem Maße von der Beschaffenheit der Ausgangspulver abhängen, die für die Herstellung der Sinterkörper nach üblichen pulvermetallurgischen Verfahren Verwendung finden. So werden beispielsweise für die drucklose Sinterung von Siliciumcarbid, Borcarbid oder Gemischen hiervon sehr feine Ausgangspulver benötigt, die nicht nur hinsichtlich der Teilchengröße und Teilchengrößenverteilung, sondern auch hinsichtlich des Gehalts an Verunreinigungen bestimmten Anforderungen genügen müssen. Derartige Pulver müssen in ausreichendem Maße sinteraktiv und praktisch frei von Fremdstoffen sein, die den Sintervorgang stören oder zu einem unerwünschten Fremdstoffgehalt im fertigen Sinterkörper führen können.

Für die Herstellung von sinteraktiven Siliciumcarbidpulvern wird aus wirtschaftlichen Gründen und wegen der leichteren Verfügbarkeit vorwiegend das im Acheson-Prozeß anfallende SiC verwendet, das aufgrund der hohen Herstellungstemperatur überwiegend aus der thermodynamisch stabileren α-Modifikation besteht, worunter hexagonale und rhomboedrische Polytypen zu verstehen sind, neben einem nicht auszuschließenden Anteil an kubischem SiC. Durch Intensivmahlung von kompakten Körnern aus der großtechnischen SiC-Produktion werden die SiC-Pulver in der erforderlichen Feinheit erhalten. Anschließend müssen die Pulver einer naßchemischen Behandlung unterzogen werden, um Fremdstoffe aus dem Mahlabrieb und insbesondere anhaftendes Siliciumdioxid und freies Silicium zu entfernen, die den Sintervorgang stören und/oder zu einer unerwünschten Erhöhung des Restsauerstoffs-oder Metallverunreinigungsgehaltes im fertigen Sinterkörper führen können. Der Mahlabrieb wird üblicherweise durch Salzsäurebehandlung und Siliciumdioxid durch Flußsäure-und/oder Salpetersäurebehandlung entfernt (vgl. US-A-4,230,497). Für die Aufbereitung von SiC-Schleifkorngemischen ist auch die naßchemische Behandlung mit heißen Laugen bekannt (vgl. "Ullmann's Enzyklopädie der technischen Chemie", Band 21 (1982), Seite 435).

Zur Entfernung von freiem Kohlenstoff ist außerdem eine mehrstündige Glühbehandlung bei Temperaturen von mindestens 700°C zweckmäßig (vgl. DE-A-29 12 443 und W. Böcker et al in "Powder Metallurgy Int.", Vol. 13 - (1981), Seite 37-39).

Für die Herstellung von sinteraktiven Borcarbidpulvern ist es ebenfalls aus wirtschaftlichen Gründen vorteilhaft von grobkörnigem, kristallinem Borcarbid auszugehen, das großtechnisch nach dem Schmelzreduktionsverfahren aus Borsäure und Kohlenstoff im elektrischen Ofen hergestellt worden ist. Dieses muß ebenfalls zunächst einer Intensivmahlung bis auf die erforderliche Kornfeinheit und - schließlich einer naßchemischen Behandlung unterzogen werden. Sinteraktive Gemische aus Siliciumcarbid und Borcarbid können auch gemeinsam aufgemahlen und einer gemeinsamen naßchemischen Behandlung zur Entfernung von sinterhemmenden Verunreinigungen unterzogen werden (vgl. DE-A-32 18 052).

Diese bekannten Aufbereitungsverfahren zur Herstellung von sinteraktiven Pulvern haben jedoch mehrere Nachteile, die am Beispiel von SiC wie folgt erläutert werden:

1. Für die Intensivmahlung dieses abrasiven Materials, die üblicherweise durch Naßmahlung in Mühlen mit Mahlkörperfüllung durchgeführt wird, sind bis zum Erreichen der erforderlichen Kornfeinheit sehr lange Mahlzeiten erforderlich, was nicht nur mit einem beträchtlichen Verschleiß der Mahlaggregate und damit einem hohen Mahlabrieb verbunden ist, sondern auch mit einer deutlichen Qualitätsverschlechterung des SiC-Pulvers selbst, in dem aufgrund tribochemischer Reaktionen der Gehalt an freiem Kohlenstoff und an Siliciumdioxid erhöht wird.

2. Dieser unerwünscht hohe C-Gehalt muß durch anschließende Glühbehandlung entfernt werden, wodurch gleichzeitig der SiC-Feinkornanteil angegriffen und zu SiO₂ aufoxidiert wird.

3. Zur Entfernung des hohen Mahlabriebs ist eine intensive Salzsäurebehandlung notwendig, wodurch ebenfalls der SiC-Feinkornanteil angegriffen wird.

4. Der unerwünscht hohe SiO₂-Gehalt muß durch naßchemische Reinigung, üblicherweise durch die wenig umweltfreundliche Flußsäurebehandlung, entfernt werden, wobei aber ein unerwünschter Si-Gehalt praktisch unverändert bleibt.

Diese bekannten Pulveraufbereitungsverfahren sind daher nicht nur zeit-und kostenaufwendig, sondern auch mit Qualitäts-und Ausbeuteverlusten verbunden.

Es stellt sich somit die Aufgabe, ein Verfahren zur Herstellung von sinteraktiven Siliciumcarbid-und/oder Borcarbidpulvern mit maximalen Teilchengrößen von 1 μm und feiner durch Naßmahlung in wäßriger Suspension unter Verwendung von Mühlen mit Mahlkörperfüllung und anschließender naßchemischer Behandlung zur Verfügung zu stellen, bei dem die Mahldauer verkürzt und die Reinigung auf einfachere und wirkungsvollere Weise durchgeführt werden kann, ohne Verminderung von Qualität und Ausbeute der Pulver.

Diese Aufgabe wird erfindungsgemäß dadurch gelöst, daß die Naßmahlung unter Zusatz von Antioxidantien in Gegenwart von Tensiden und die naßchemische Behandlung mit Kaliumhydroxid als Base durchgeführt wird.

Unter Antioxidantien sind handelsübliche organische Verbindungen zu verstehen, welche als Radikalfänger für die bei der Autoxidation auftretenden freien Radikale wirken und welche die Reinheit der Siliciumcarbid-und Borcarbidpulver nicht beeinträchtigen, beispielsweise keine unerwünschte Erhöhung des Gehalts an metallischen Verunreinigungen in den Pulvern hervorrufen.

Geeignete Antioxidantien umfassen Phenole und Phenolderivate, wie Alkyl-, Amino-und Hydroxy-substituierte Phenole, Bisphenole und Diphenole. Beispiele sind Alkylphenole, wie tert.-Butyl-4-methoxyphenol und 2.6-Di-tert.-butyl-4-methylphenol; Aminophenole, wie 2-Aminophenol und 4-Methylaminophenol; Bisphenole, wie 2.2.-Bis-(4-hydroxyphenyl)propan; Diphenole, wie 4.4-Dihydroxybiphenyl; Hydroxyphenole, wie 1.2-Dihydroxybenzol (Brenzcatechin) und insbesondere 1.4-Dihydroxybenzol (Hydrochinon) und dessen Derivate, wie Hydrochinonmonomethylether und 2.2.4-Trimethylhydrochinon.

Weitere geeignete Antioxidantien umfassen Arylamine und Arylaminderivate. Diese können weiter klassifiziert werden als Keton-Amin-Kondensationsprodukte, Diaryldiamine, Diarylamine und Keton-Diarylamin-Kondensationsprodukte. Beispiele sind Keton-Amin-Kondensationsprodukte, wie Dihydrotrimethylchinolin und 6-Ethoxy-1.2-dihydro-2.2.4-trimethylchinolin, Diarylamine, wie N,N'-Diphenyl-p-phenylendiamin und N-N'-Di-β-naphthyl-p-phenylendiamin; Diaryla-

mine, wie Monoctyl-diphenylamin und Dioctyl-diphenylamin; Keton-Diarylamin-Kondensationsprodukte, wie komplexe Gemische, die durch Reaktion von Diphenylamin und Aceton erhalten werden.

Bei der Naßmahlung in wäßriger Suspension werden erfindungsgemäß als Antioxidantien vorteilhaft Hydrochinon und Hydrochinonderivate, wie Hydrochinonmonomethylether und 2,2,4-Trimethylhydrochinon verwendet.

Beispiele für Tenside sind Aniontenside, wie Alkancarboxylate, Alkansulfonate, insbesondere Alkylbenzolsulfonate vom Typ des Dodecylbenzolsulfonats, Alkylsulfate, Ethersulfate und Fettalkohol (ether)sulfate; Kationtenside, wie geradkettige und cyclische Ammoniumverbindungen und quartäre Ammoniumsalze; nichtionogene Tenside, wie Polyether, insbesondere Alkylphenolpolyglykolether und Fettsäureester von Polyalkoholen; sowie Amphotenside, wie Glyzerinderivate mit Betain-Struktur und Sulfobetaine. Diese Tenside können einzeln oder im Gemisch verwendet werden, wobei sich quartäre Ammoniumsalze, sowie Alkylbenzolsulfonate im Gemisch mit Alkylsulfaten oder Alkylpolyglykolethersulfaten besonders bewährt haben.

Durch den erfindungsgemäßen Zusatz der Antioxidantien in Gegenwart der Tenside bei der Naßmahlung in wäßriger Suspension wird die Mahldauer bis zum Erreichen der gewünschten Kornfeinheit von 1 μm und feiner erheblich verkürzt, wobei die Zeitersparnis etwa 25 -30 % betragen kann. Diese Verkürzung der Mahldauer ist nicht nur aus wirtschaftlichen Gründen vorteilhaft, da hierdurch eine bessere Auslastung der Mahlaggregate möglich ist und der Verschleiß der Mahlaggregate durch Abrieb von Mahlkörpern und Rührer deutlich geringer ist. So kann beispielsweise in handelsüblichen Mahlaggregaten vom Typ des Attritors® der Stahlkugelabrieb um bis zu 40% verringert und die Standzeit des Rührers um bis zu 60 % erhöht werden. Die Pulver werden jedoch auch durch den geringeren Mahlabrieb weniger stark verunreinigt, so daß üblicherweise zur Entfernung des Eisens aus dem Mahlabrieb notwendige Salzsäurebehandlung unter schonenderen Bedingungen für die Pulver durchgeführt werden kann und die damit verbundenen Verluste an Feinkornanteilen in den Pulvern geringer sind.

Im Falle des Siliciumcarbids ist jedoch entscheidend, daß durch den erfindungsgemäßen Zusatz bei der Naßmahlung der Gehalt an freiem Kohlenstoff und an Siliciumdioxid in den aufgemahlenen Pulvern nur wenig erhöht wird. Der Kohlenstoffgehalt beträgt nach der Aufmahlung im allgemeinen weniger als 1 Gew.-%. Da beispielsweise für die drucklose Sinterung von Siliciumcarbid ein Kohlenstoffgehalt von bis zu etwa 1 Gew.-% toleriert werden kann, bedeutet das, daß die aufwendige Glühbehandlung, die bisher zur Entfernung des überschüssigen freien Kohlenstoffs notwendig war, eingespart werden kann. Damit entfallen die stark ausbeutevermindernden Glühverluste des SiC-Feinkornanteils und der damit verbundene weitere Anstieg des $SiO_2$-Gehalts.

Im Falle des Borcarbids wird durch den erfindungsgemäßen Zusatz bei der Naßmahlung ebenfalls nicht nur der Anteil an unerwünschtem Mahlabrieb um bis zu etwa 25 % gesenkt, sondern auch der Sauerstoffgehalt ist bis zu etwa 30 % niedriger als bei der Naßmahlung ohne den erfindungsgemäßen Zusatz.

Nach der Naßmahlung unter den erfindungsgemäßen Bedingungen werden die Pulver in bekannter Weise durch Salzsäurebehandlung vom Mahlabrieb befreit.

Die anschließende naßchemische Behandlung der Pulver wird vorteilhaft unter Verwendung einer 5 -50 Gew.-%igen wäßrigen Kaliumhydroxidlösung durchgeführt bei Temperaturen im Bereich von Raumtemperatur bis zum Siedepunkt des Reaktionsgemisches, wobei durch mechanische Bewegung für eine gute Durchmischung der Reaktionspartner gesorgt werden kann. Die besten Ergebnisse werden mit etwa 10 -20 Gew.-%igen wäßrigen Kaliumhydroxidlösungen erzielt. Bei Temperaturen im Bereich von 70 - 100°C sind in Abhängigkeit von dem vorhandenen $SiO_2$-Gehalt Behandlungszeiten von 3 -6 Stunden ausreichend. Längere Behandlungszeiten schaden nicht, bringen aber im allgemeinen keinen wesentlichen Vorteil. Dann werden die Pulversuspensionen auf Raumtemperatur abgekühlt und mit Wasser neutral gewaschen. Die Gewinnung der so behandelten sinteraktiven Pulver erfolgt durch übliche bekannte Maßnahmen, wie Zentrifugieren oder Filtrieren und anschließendem Trocknen.

Unter Einhaltung der erfindungsgemäß ausgewählten Bedingungen können sinteraktive α-SiC-Pulver mit einer spezifischen Oberfläche von > 15m²/g (gemessen nach BET), einem $O_2$-Gehalt von < 0,6 Gew.-%, einem Gehalt an freiem C von < 1,0 Gew.-% und einem Gehalt an freiem Si von 0,0 Gew.-% erhalten werden.

Wenn α-SiC-Pulver mit noch geringerem $O_2$-Gehalt erwünscht sind, kann die naßchemische Behandlung mit KOH unter erhöhtem Druck bei Temperaturen bis zu 300°C durchgeführt werden. Dadurch kann der $O_2$-Gehalt im α-Si-Pulver auf weniger als 0,3 Gew.-% erniedrigt werden.

Die mit dem erfindungsgemäßen Aufbereitungsverfahren insgesamt erzielten Ausbeuten an SiC liegen bei mindestens 98 %, bezogen auf eingesetztes SiC vor Beginn der Naßmahlung. Die Verluste an SiC-Feinkornanteilen sind somit sehr gering.

Im Gegensatz zu der bisher üblichen Flußsäurebehandlung war in den erfindungsgemäß mit Kaliumhydroxid behandelten α-SiC-Pulvern kein freies Silicium mehr nachweisbar.

Außerdem wurde nachgewiesen, daß bei Durchführung der naßchemischen Behandlung mit wäßriger Natriumhydroxidlösung oder mit konzentrierter Ammoniaklösung anstelle von Kaliumhydroxid unter praktisch gleichen Bedingungen nur α-SiC-Pulver mit einem Sauerstoffgehalt von 1,0 Gew.-% oder mehr erhalten werden können, wie in den folgenden Beispielen durch Vergleichsversuche bestätigt.

Mit Hilfe der erfindungsgemäß ausgewählten Maßnahmenkombination bei der Pulveraufbereitung sind daher sinteraktive α-SiC-und/oder $B_4C$-Pulver auf einfachere Weise in der gewünschten Feinheit und Reinheit zugänglich als nach den bisher bekannten Verfahren. Es war nicht vorhersehbar, daß durch den erfindungsgemäßen Zusatz bei der Naßmahlung die gewünschte Kornfeinheit von 1 μm und feiner durch weniger langes Aufmahlen erreicht werden kann und die üblicherweise durch das Aufmahlen eingebrachten oder gebildeten Verunreinigungen teilweise so gering sein würden, daß auf ihre Entfernung überhaupt verzichtet werden kann, wie im Falle des Kohlenstoffs bei SiC. Da alle Maßnahmen zur Entfernung von Verunreinigungen nicht nur diese beseitigen, sondern auch die Feinkornanteile des Sinterpulvers angreifen, ist die Einsparung oder die schonendere Durchführung derartiger Maßnahmen von entscheidender Bedeutung, um Ausbeuteverluste, insbesondere der wertvollen Feinkornanteile des Sinterpulvers, zu vermeiden. Darüber hinaus war es nicht vorhersehbar, daß durch die Auswahl von Kaliumhydroxid als Base für die naßchemische Behandlung anhaftendes Siliciumdioxid besser entfernt werden kann, als mit anderen Basen, wie Natriumhydroxid oder Ammoniak unter gleichen Bedingungen. Sauerstoffgehalte von < 0,6 Gew.-% wurden bisher nur mit der wenig umweltfreundlichen Flußsäurebehandlung erreicht, durch welche aber ein Gehalt an freiem Silicium unverändert bleibt.

In den folgenden Beispielen wurde als Ausgangsmaterial ein handelsübliches α-SiC-Pulver aus dem Acheson-Prozeß verwendet mit folgender Pulvercharakteristik:

mittlere Teilchengröße : etwa 15 μm

$O_2$ : 0,6 Gew.-%

$C_{frei}$ : 0,6 Gew.-%

$Si_{frei}$ : 0,2 Gew.-%

Beispiel 1:

Naßmahlung:

Jeweils 50 g des α-SiC-Pulvers wurden in 220 ml Wasser unter Zusatz von 0,2 Gew.-% Hydrochinon als Antioxidans und 0,1 Gew.-% eines quartären Ammoniumsalzes als Tensid suspendiert und in einer Rührwerkskugelmühle mit Stahlkugelfüllung 8 bzw. 6 Stunden bei 1200 upm Rührerdrehzahl gemahlen. Dann wurden der Kugelabrieb und der Abrieb des Rührers in Gew.-% bestimmt. Die aufgemahlenen Pulver wurden einer Salzsäurebehandlung unterzogen und der Gehalt an Sauerstoff, Kohlenstoff und Silicium in den getrockneten Pulvern bestimmt.

Naßchemische Behandlung:

Anschließend wurden die Pulver mit 20 Gew.-%iger wäßriger Kaliumhydroxidlösung 3 Stunden unter Rühren auf 80°C erhitzt. Nach dem Waschen und Trocknen der Pulver wurden die spezifische Oberfläche in m²/g, die Ausbeute in %, bezogen auf eingesetztes SiC vor der Naßmahlung, sowie der Gehalt an Sauerstoff, Kohlenstoff und Si bestimmt.

Zum Vergleich wurde die Naßmahlung nur in Wasser ohne Zusatz von Antioxidans und Tensid und die naßchemische Behandlung mit Flußsäure (5 ml HF in 20 ml H₂O) durch 24 Stunden langes Rühren bei Raumtemperatur durchgeführt. Die Ergebnisse unter den jeweils angegebenen Bedingungen sind in der Tabelle 1 zusammengestellt:

Tabelle 1:

| Beispiel | 1 a | 1 b | 1 c (zum Vergleich) |
|---|---|---|---|
| Naßmahlung | $H_2O$ + 0,2 % A + 0,1 % T | $H_2O$ + 0,2 % A + 0,1 % T | $H_2O$ (ohne Zusatz) |
| Mahldauer | 8 St. | 6 St. | 8 St. |
| Kugelabrieb | 91,6 % | 78,0 | 144,8 % |
| Rührerabrieb | 8,0 % | 6,0 | 11,2 % |
| Produkt nach HCl-Behandlung | | | |
| $O_2$ | 1,2 % | 1,0 % | 2,2 % |
| $C_{frei}$ | 0,9 % | 0,7 % | 1,6 % |
| $Si_{frei}$ | 0,2 % | 0,2 % | 0,2 % |
| Naßbehandlung | 20 % KOH/ 3 St./80°C | 20 % KOH/ 3 St./80°C | 25 % HF/ 24 St./RT |
| Endprodukt | | | |
| Ausbeute | 98 % | 98 % | 90 % |
| spez.Oberfl. | 19 $m^2$/g | 17,1 $m^2$/g | 17,5 $m^2$/g |
| $O_2$ | 0,38 % | 0,36 % | 0,44 % |
| $C_{frei}$ | 0,9 % | 0,7 % | 1,6 % |
| $Si_{frei}$ | 0,00 % | 0,00 % | 0,2 % |

A = Antioxidans

T = Tensid

RT = Raumtemperatur

Wie aus den Daten in Tabelle 1 ersichtlich, wurden bei der Naßmahlung mit dem erfindungsgemäßen Zusatz bei jeweils gleicher Mahldauer ein erheblich geringerer Kugelabrieb und Rührerabrieb beobachtet als ohne den erfindungsgemäßen Zusatz (vgl. Beispiel 1 a und 1 c).

Der Gehalt an freiem Kohlenstoff bleibt bei gleicher und bei verkürzter Mahldauer jeweils unter 1 Gew.-%, während er ohne den erfindungsgemäßen Zusatz auf 1,6 Gew.-% angestiegen war, was für den Einsatz des Pulvers bei der drucklosen Sinterung nicht mehr toleriert werden kann.

Bei Verkürzung der Mahldauer um 25 % (6 Stunden, vgl. Beispiel 1 b) wurde die gleiche Kornfeinheit erzielt wie ohne den erfindungsgemäßen Zusatz bei 8 Stunden Mahldauer, wie aus den Daten für die spezifische Oberfläche hervorgeht (vgl. Beispiel 1 b und 1 c).

Nach der erfindungsgemäßen Naßbehandlung mit Kaliumhydroxid betrug die Ausbeute an SiC jeweils 98 %, während sie nach der Flußsäurebehandlung und Aufmahlung ohne Zusatz auf 90 % abgesunken war. Außerdem wurde durch die KOH-Behandlung freies Silicium restlos entfernt.

Beispiel 2:

Jeweils 50 g des α-SiC-Pulvers wurden unter den gleichen Bedingungen, wie in Beispiel 1 b beschrieben, einer Naßmahlung von 6 Stunden Dauer unterzogen. Dann wurde die naßchemische Behandlung wie folgt variiert:

a): 10 % KOH/3 Stunden/80°C;

b): 20 % KOH/3 Stunden/250°C unter einem Druck von 15 -20 bar;

c) (zum Vergleich): konzentrierte wäßrige Ammoniaklösung/72 Stunden/Rückflußtemperatur, hierbei ergab eine Wiederholung der Behandlung kein besseres Ergebnis in Bezug auf den Sauerstoffgehalt;

d) (zum Vergleich): 20 % NaOH/3 Stunden/80°C; hierbei ergab eine Verlängerung der Reaktionszeit bis zu 48 Stunden kein besseres Ergebnis in Bezug auf den Sauerstoffgehalt.

Die Ergebnisse der untersuchten Endprodukte sind in der Tabelle 2 zusammengestellt:

Tabelle 2:

| Beispiel | 2 a | 2 b | 2 c (zum Vergl.) | 2 d (zum Vergl.) |
|---|---|---|---|---|
| Naßbehandlung | 10 % KOH/ 3 St./80°C | 20 % KOH/ 3 St./250°C 15-20 bar | konz.NH₃/ 72 St./ Rückfluß- temperatur | 20 % NaOH/ 3 St./80°C |
| Endprodukt spez.Ober- fläche | 17,0 m²/g | 17,0 m²/g | 17,0 m²/g | 17,0 m²/g |
| $O_2$ | 0,52 % | 0,29 % | 1,4 % | 1,0 % |
| $C_{frei}$ | 0,7 % | 0,7 % | 0,7 % | 0,7 % |
| $Si_{frei}$ | 0,00 % | 0,00 % | 0,00 % | 0,00 % |

Wie aus den Daten in Tabelle 2 ersichtlich, ergab die KOH-Behandlung unter Druck eine Verringerung des Sauerstoffgehalts auf weniger als 0,3 Gew.-% (vgl. Beispiel 2 b), auch mit 10 % KOH blieb der Sauerstoffwert noch unter 0,6 Gew.-% (Beispiel 2 a), während mit konzentriertem Ammoniak und 20 % NaOH der Sauerstoffgehalt nur auf Werte von 1,0 und höher erniedrigt werden konnte (vgl. Beispiel 2 c und 2 d), obwohl auch hiermit freies Silicium restlos entfernt wurde.

Beispiel 3:

100 kg des α-SiC-Pulvers wurden unter den gleichen Bedingungen wie in Beispiel 1 b beschrieben einer Naßmahlung vergleichbarer Dauer unterzogen. Für die naßchemische Behandlung wurden die Pulver mit 100 1 20 Gew.-%iger, wäßriger Kaliumhydroxidlösung versetzt und 3 Stunden unter Rühren auf 80°C erhitzt. Nach dem Abkühlen auf Raumtemperatur wurde das Pulver gewaschen, bis das Waschwasser neutral reagierte,und dann getrocknet.

Eigenschaften des Endprodukts:

spezifische Oberfläche: 17,0 m²/g

$O_2$: 0,58 %

$C_{frei}$: 0,7 %

$Si_{frei}$: 0,00 %.

Dieses Beispiel beweist, daß auch im Großversuch gleich gute Ergebnisse mit Hilfe der erfindungsgemäßen Maßnahmenkombination erhalten werden können.

**Ansprüche**

1. Verfahren zur Herstellung von sinteraktiven Siliciumcarbid-und/oder Borcarbidpulvern mit maximalen Teilchengrößen von 1 μm und feiner durch Naßmahlung in wäßriger Suspension unter Verwendung von Mühlen mit Mahlkörperfüllung und anschließender naßchemischer Behandlung, **dadurch gekennzeichnet,**daß die Naßmahlung unter Zusatz von Antioxidantien in Gegenwart von Tensiden und die naßchemische Beshy handlung mit Kaliumhydroxid als Base durchgeführt wird.

2. Verfahren nach Anspruch 1, **dadurch gekennzeichnet,** daß die Naßmahlung unter Zusatz von Hydrochinon oder Hydrochinonderivaten in Gegenwart von quartären Ammoniumsalzen durchgeführt wird.

3. Verfahren nach Anspruch 1, **dadurch gekennzeichnet,** daß die naßchemische Behandlung unter Verwendung einer 5 -50 Gew.-%igen wäßrigen Kaliumhydroxidlösung durchgeführt wird.

4. Verfahren nach Anspruch 1 und 3, **dadurch gekennzeichnet,** daß die naßchemische Behandlung unter Normaldruck bei Temperaturen im Bereich von Raumtemperatur bis zur Siedetemperatur des Reaktionsgemisches durchgeführt wird.

5. Verfahren nach Anspruch 1 und 3, **dadurch gekennzeichnet,** daß die naßchemische Behandlung unter erhöhtem Druck bei Temperaturen bis zu 300°C durchgeführt wird.